# EUROPEAN PATENT APPLICATION

(11) **EP 3 301 632 A1**
(43) Date of publication of application: **04.04.2018**
(21) Application number: 17192862.5
(22) Date of filing: 25.09.2017
(51) Int. Cl.: G06Q 30/06, G06Q 30/02

(54) **METHOD AND DEVICE FOR PROVIDING EVALUATION VALUE**

(30) Priority: 29.09.2016 JP 2016191894
(71) Applicant: FUJITSU LIMITED, Kanagawa 211-8588 (JP)
(72) Inventor: Matsumoto, Yasuhide, Kanagawa, 211-8588 (JP)
(74) Representative: Hoffmann Eitle

(57) **Abstract**

A method for providing evaluation value is executed by a computer. The method includes, acquiring a first value of a first user from a first service system, the first value indicating a first evaluation of the first user in the first service system, generating a second value in accordance with both the first value and an algorithm corresponding to a second service system, and providing the second service system with the second value as a second evaluation of the first user in the second service system.

## Description

### TECHNICAL FIELD

The embodiments discussed herein are related to an evaluation value providing device and an evaluation value providing method.

### BACKGROUND ART

Conventionally, in a service of electronic commerce using the Internet, or the like, as an index used for performing a safe transaction, an evaluation value of credit information or the like of a user that uses the service is given and held for each user in each service. Also, a system that is used for sharing credit information in a plurality of sites that operate electronic transactions has been proposed.

For example, a system of converting first evaluation information that is generated for a member by a first community server to second evaluation information that is generated by a second community server has been proposed. In this system, a credit information sharing certificate that has been prepared by the second community server in advance is acquired, and an evaluation indicated by the first evaluation information is converted to an evaluation in the second evaluation information, based on the credit information sharing certificate.

Currently, sharing services that mediate when a plurality of people shares various resources, such as cars, free rooms, clothes, manpower and capabilities, funds, or the like, or when lending and borrowing between individuals take place have spread. Also, in the above-described sharing services, in many cases, for each service, an evaluation value of a user that uses the service is held.

A technology relating to this is disclosed in, for example, Japanese Laid-open Patent Publication No. 2002-170066.

### SUMMARY

### TECHNICAL RPOBLEM

In a technology of related art, each community server has a certificate issuing function and an evaluation information converting function. However, in a service providing system which provides services, such as a sharing service, the contents of which are various and in which there are various formats of evaluation values held in each service, it is difficult to apply the technology of the related art and share an evaluation value between services. Also, it is not realistic to cause, each time a new service joins, the service providing system to have a certificate issuing function and an evaluation information converting function of the new service in the same manner as that in the technology of the related art.

### SOLUTION TO PROBLEM

According to an aspect of the invention, a method for providing evaluation value includes, acquiring a first value of a first user from a first service system, the first value indicating a first evaluation of the first user in the first service system, generating a second value in accordance with both the first value and an algorithm corresponding to a second service system, and providing the second service system with the second value as a second evaluation of the first user in the second service system.

### ADVANTAGEOUS EFFECTS OF INVENTION

An evaluation of a user may be shared between different service providing systems.

### BRIEF DESCRIPTION OF DRAWINGS

FIG. 1 is a block diagram illustrating a schematic configuration of an evaluation value providing system according to first and second embodiments;
FIG. 2 is a functional block diagram of an evaluation value providing device according to the first embodiment;
FIG. 3 is a table illustrating an example of a table that stores a format of an evaluation value for each sharing service;
FIG. 4 is a table illustrating an example of a table that stores a type for each sharing service;
FIG. 5 is a block diagram illustrating a schematic configuration of a computer that functions as an evaluation value providing device according to the first and second embodiments;
FIG. 6 is a flowchart illustrating an example of evaluation value providing processing;
FIG. 7 is a functional block diagram of an evaluation value providing device according to the second embodiment;
FIG. 8 is a table illustrating an example of an evaluation value database;
FIG. 9 is a flowchart illustrating an example of acquisition and conversion processing; and
FIG. 10 is a flowchart illustrating an example of providing processing.

### DESCRIPTION OF EMBODIMENTS

Examples of embodiments of the present disclosure will be described in detail with reference to the accompanying drawings.

### <First Embodiment>

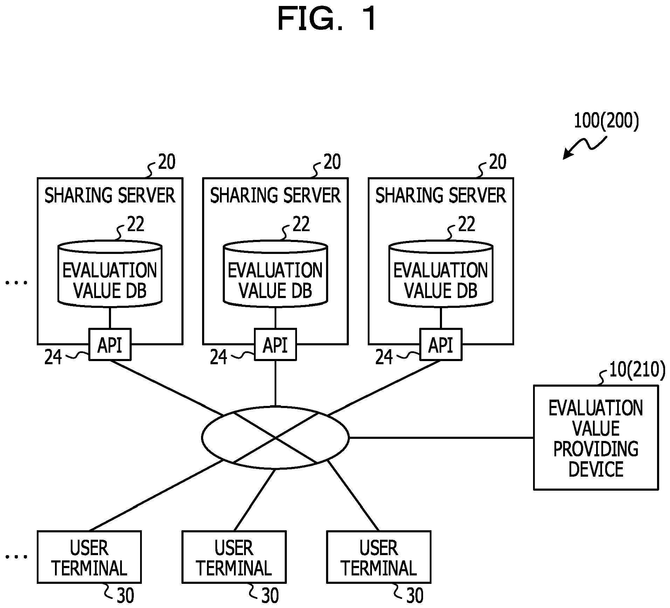

As illustrated in FIG. 1, an evaluation value providing system 100 according to a first embodiment includes an evaluation value providing device 10, a plurality of sharing servers 20, and a plurality of user terminals 30. The evaluation value providing device 10, each of the sharing servers 20, and each of the user terminals 30 are coupled to one another via a network, such as the Internet or the like. Note that the numbers of the sharing servers 20 and the user terminals 30 are not limited to those in an example of FIG. 1.

Each of the sharing servers 20 is a device that provides a sharing service, and may be realized by, for example, an information processing device, such as a server device, a personal computer, or the like. The sharing service is a service that mediates when a plurality of people shares various resources, such as cars, free rooms, clothes, manpower and capabilities, funds, or the like, or when lending and borrowing between individuals take place. In this embodiment, a case where the sharing servers 20 provide sharing services related to sharing of different resources will be described. For example, one of the sharing servers 20 provides a sharing service, such as Uber or the like, which allocates vehicles, and another one of the sharing servers 20 provides an accommodation sharing service, such as Airbnb or the like. That is, respective types of sharing services, which correspond to the sharing servers 20, differ from one another.

The sharing servers 20 serve as web applications or smartphone applications and provide sharing services on the user terminals 30. Each of the sharing servers 20 includes an evaluation value database (DB) 22 in which an evaluation value for each user, which indicates credit information or the like of the user that uses the sharing service, is stored. The evaluation value is given to each user, based on a use result of a service of the user, an evaluation from another user, or the like, and a unique format is employed for each sharing service. Also, the sharing server 20 includes an application programming interface (API) 24 that outputs the evaluation value stored in the evaluation value DB 22 to the evaluation value providing device 10 and receives an evaluation value provided from the evaluation value providing device 10 to store the evaluation value in the evaluation value DB 22.

Each of the user terminals 30 is an information processing terminal that is used by a user that uses the sharing service, and may be realized by, for example, a personal computer, a tablet terminal, a smartphone, or the like. Note that the users of the sharing service include both of a provider that provides a resource that is a target that is to be shared in the sharing service and a user of the resource. In the user terminal 30, by starting up an application of a desired sharing service, one of the sharing servers 20, which provides the sharing service, is accessed by the user terminal 30.

In accordance with a request from a user, the evaluation value providing device 10 causes an evaluation value of the user, which is held in each of the sharing servers 20, to be shared between sharing services. That is, the evaluation value providing device 10 functions as a personal data store (PDS) that is used by the user for sharing the evaluation value, which is personal data of the user, between a plurality of services.

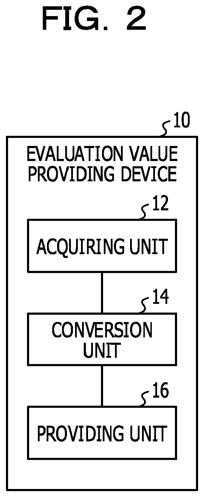

As illustrated in FIG. 2, the evaluation value providing device 10 functionally includes an acquisition unit 12, a conversion unit 14, and a providing unit 16.

The acquisition unit 12 receives an evaluation value providing request from a user via the corresponding one of the user terminals 30. The evaluation value providing request includes a user ID, which is identification information of the user, and a service ID, which is identification information of a sharing service that is to be a providing destination of an evaluation value. The acquisition unit 12 notifies each of the sharing servers 20 of the user ID included in the received evaluation value providing request. In each of the sharing servers 20, the API 24 receives a notification of the user ID, retrieves an evaluation value that corresponds to the user ID from the evaluation value DB 22, acquires, if there is the evaluation value that corresponds to the user ID, the evaluation value, and transmits the evaluation value to the evaluation value providing device 10. A sharing service that holds the evaluation value that corresponds to the user ID will be hereinafter referred to as a "sharing service that is a providing source". If the evaluation value of the user is stored in each of the evaluation value DBs 22 of the plurality of sharing servers 20, a plurality of evaluation values is acquired from ones of the sharing servers 20, which correspond to sharing services of a plurality of providing sources.

The conversion unit 14 converts each of the evaluation values acquired by the acquisition unit 12 to a format that corresponds to an evaluation value that is given to the user by the corresponding sharing service that is a providing destination of the evaluation value, which is identified by the service ID included in the evaluation value providing request.

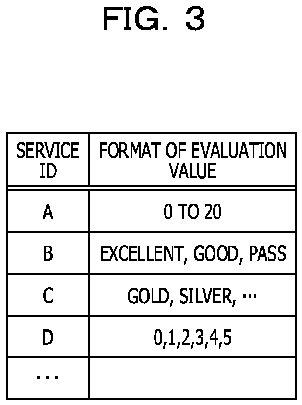

For example, the conversion unit 14 holds a table of FIG. 3, which stores a format of an evaluation value for each sharing service, and an evaluation value conversion algorithm used for conversion between different formats in advance. For example, when an evaluation value in a format of a five grade evaluation system is converted to an evaluation value in a format of a ten grade evaluation system, the conversion algorithm may be an algorithm of doubling an evaluation value or the like. Then, the conversion unit 14 refers to the table of FIG. 3 and identifies a format of the acquired evaluation value and a format of the evaluation value in a sharing service that is a providing destination. Then, the conversion unit 14 converts the acquired evaluation value to the format of the evaluation value in the sharing service that is a providing destination, using the evaluation value conversion algorithm used for conversion between the identified formats.

Also, the conversion unit 14 integrates evaluation values that have been converted to the format of the evaluation value of the sharing service that is a providing destination, and calculates an integrated evaluation value. For example, the conversion unit 14 calculates the integrated evaluation value such that an evaluation value acquired from one of the sharing servers 20, which corresponds to a sharing service, the type of which is the same as or similar to the type of the sharing service that is a providing destination, is preferentially integrated.

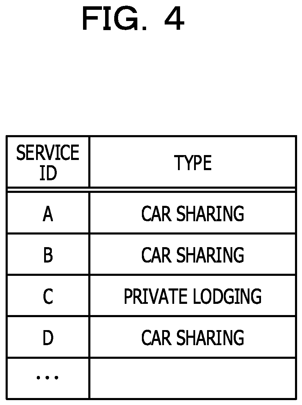

More specifically, the conversion unit 14 holds, for example, a table of FIG. 4, which stores a type for each sharing service, in advance and refers to the table to identify the types of sharing services of an evaluation value providing source and an evaluation value providing destination. Then, the conversion unit 14 extracts an evaluation value acquired from one of the sharing servers 20, which corresponds to the sharing service that is a providing source, the type of which is the same as or similar to the type of the sharing service that is a providing destination, and calculates as an integrated evaluation value an evaluation value, an evaluation of which is the highest among the extracted evaluation values. Note that an average, a median, or the like of the extracted evaluation values may be calculated as an integrated evaluation value. Also, a weighted sum of all of evaluation values may be calculated as an integrated evaluation value. In this case, a weight on the evaluation value of the sharing service that is a providing source, the type of which is the same as or similar to the type of the sharing service that is a providing destination, is increased, and thereby, the evaluation value of the sharing service that is a providing source, the type of which is the same as or similar to the type of the sharing service that is a providing destination, may be preferentially integrated.

If there is not the evaluation value of the sharing service that is a providing source, the type of which is the same as or similar to the type of the sharing service that is a providing destination, an evaluation value, an evaluation of which is the highest among converted evaluation values, or an average, a median, or the like of the converted evaluation values may be calculated as an integrated evaluation value. Note that, if there is only a single evaluation value that has been acquired by the acquisition unit 12, the conversion unit 14 employs a converted evaluation value of the single evaluation value as an integrated evaluation value.

The providing unit 16 transmits, with the user ID, the integrated evaluation value calculated or employed by the conversion unit 14 to one of the sharing servers 20, which corresponds to a sharing service that is identified by the service ID included in the evaluation value providing request. The user ID and the integrated evaluation value that have been transmitted are received by the API 24 and are stored in the evaluation value DB 22 of the sharing server 20 that is a providing destination.

Thus, for the user, as an evaluation of a sharing service, an evaluation that has been previously acquired in another sharing service may be taken over.

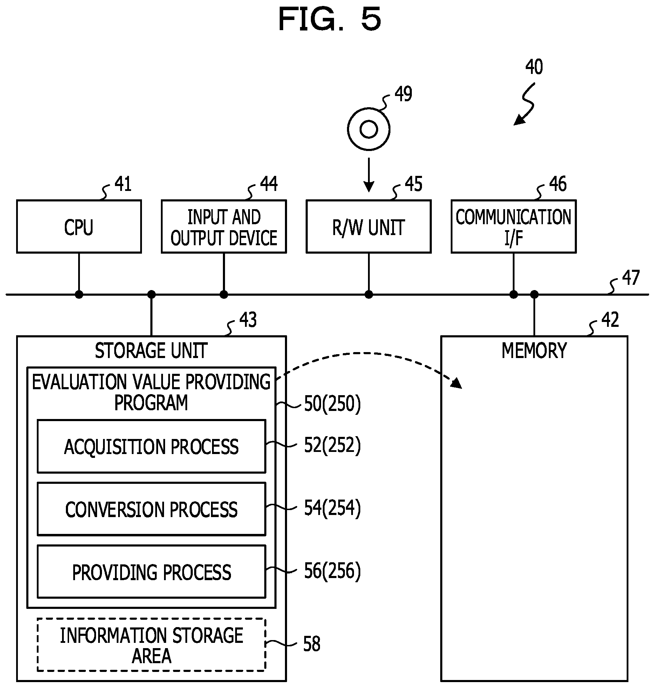

The evaluation value providing device 10 may be realized by, for example, a computer 40 illustrated in FIG. 5. The computer 40 includes a central processing unit (CPU) 41, memory 42 that serves as a temporary storage area, and a nonvolatile storage unit 43. Also, the computer 40 includes an input and output device 44, a read and write (R/W) unit 45 that controls a read and a write of data from and to a memory medium 49, and a communication interface (IF) 46 that is coupled to a network, such as the Internet or the like. The CPU 41, the memory 42, the storage unit 43, the input and output device 44, the R/W unit 45, and the communication I/F 46 are coupled to one another via a bus 47.

The storage unit 43 may be realized by a hard disk drive (HDD), a solid state drive (SSD), flash memory, or the like. An evaluation value providing program 50 that causes the computer 40 to function as the evaluation value providing device 10 is stored in the storage unit 43 that serves as a memory medium. The evaluation value providing program 50 includes an acquisition process 52, a conversion process 54, and a providing process 56.

The CPU 41 reads out the evaluation value providing program 50 from the storage unit 43 to expand the evaluation value providing program 50 in the memory 42 and sequentially executes the processes included in the evaluation value providing program 50. The CPU 41 executes the acquisition process 52 and thereby operates as the acquisition unit 12 illustrated in FIG. 2. The CPU 41 also executes the conversion process 54 and thereby operates as the conversion unit 14 illustrated in FIG. 2. The CPU 41 also executes the providing process 56 and thereby operates as the providing unit 16 illustrated in FIG. 2. Thus, the computer 40 that has executed the evaluation value providing program 50 functions as the evaluation value providing device 10.

Note that the function that is realized by the evaluation value providing program 50 may be realized by, for example, a semiconductor integrated circuit, or, more specifically, an application specific integrated circuit (ASIC) or the like.

Next, an effect of the evaluation value providing system 100 according to the first embodiment will be described.

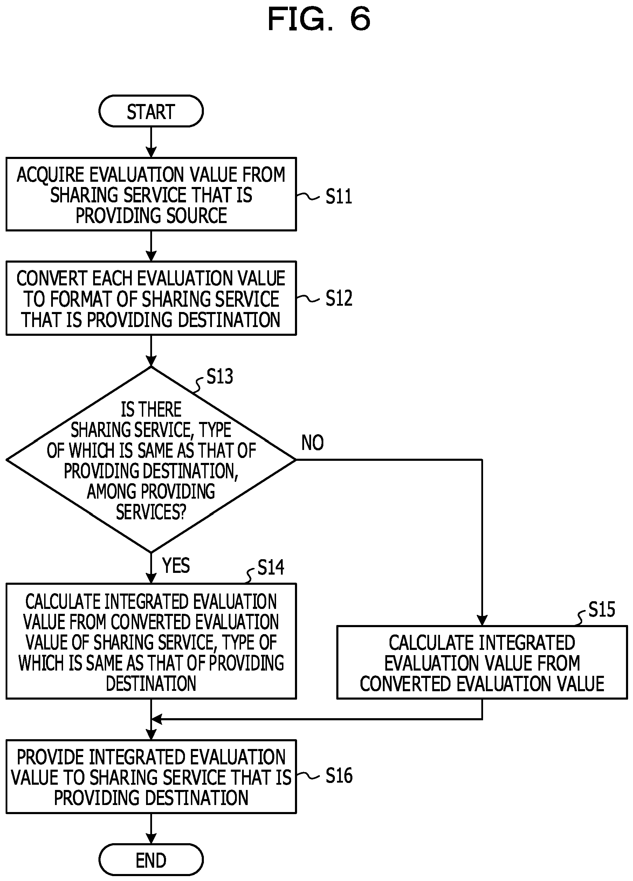

For example, a case where a user that has been given an evaluation value in one or more sharing services starts use of a new sharing service will be described as an example. The user transmits an evaluation value providing request including a service ID of the sharing service, use of which the user newly starts as a sharing service that is an evaluation value providing destination, and a user ID of the user to the evaluation value providing device 10 via the corresponding one of the user terminals 30. In this case, it is assumed that the service ID of the sharing service that is a providing destination is "D". Note that the sharing service having the service ID = X will be hereinafter referred to as the "sharing service X". When the evaluation value providing device 10 receives the evaluation value providing request, evaluation value providing processing illustrated in FIG. 6 is executed in the evaluation value providing device 10.

In Step S11, the acquisition unit 12 notifies each of the sharing servers 20 of the user ID included in the received evaluation value providing request. Then, the acquisition unit 12 acquires an evaluation value that corresponds to the user ID from each sharing server 20 that corresponds to a sharing service that is a providing source via the API 24. In this case, it is assumed that an evaluation value S_{A} = 15, an evaluation value S_{B} = GOOD, and an evaluation value S_{C} = GOLD have been acquired from a sharing service A, a sharing service B, and a sharing service C that are providing sources, respectively.

Next, in Step S12, the conversion unit 14 converts each of the evaluation values acquired by the acquisition unit 12 to a format of an evaluation value in the sharing service that is a providing destination. In this case, for example, the conversion unit 14 refers to the table illustrated in FIG. 3 to identify a format of each of the evaluation values of the sharing services A, B, and C that are providing sources and identify a format of an evaluation value of a sharing service D that is a providing destination. Then, for example, as illustrated below, each evaluation value Sᵢ (i = A, B, C) is converted to an evaluation value Sᵢ'.
The evaluation value S_{A} of the sharing service A = 15 → S_{A}' = 4
The evaluation value S_{B} of the sharing service B = GOOD → S_{B}' = 3
The evaluation value S_{C} of the sharing service C = GOLD → S_{C}' = 5

Next, in Step S13, the conversion unit 14 determines whether or not, among sharing services that are providing sources, there is a sharing service, the type of which is the same as that of the sharing service that is a providing destination. If there is a sharing service, the type of which is the same as that of the sharing service that is a providing destination, the process proceeds to Step S14, and if there is not a sharing service, the type of which is the same as that of the sharing service that is a providing destination, the process proceeds to Step S15.

For example, the conversion unit 14 refers to the table illustrated in FIG. 4 to determine whether or not, among sharing services that are providing sources, there is a sharing service, the type of which is the same as or similar to that of the sharing service that is a providing destination. In this case, since the types of the sharing services A and B that are providing sources are the same as that of the sharing service that is a providing destination, an affirmative determination is made and the process proceeds to Step S14.

In Step S14, the conversion unit 14 extracts an evaluation value that has been acquired from one of the sharing servers 20 that corresponds to a sharing service that is a providing source, the type of which is the same as that of the sharing service that is a providing destination, and, among extracted evaluation values, an evaluation value, an evaluation of which is the highest, is calculated as an integrated evaluation value. In this case, the evaluation value S_{A} = 4 and the evaluation value S_{B}' = 3, which are converted evaluation values of the sharing services A and B, are extracted and the integrated evaluation value is calculated as "4".

On the other hand, in Step S15, among the evaluation values that have been converted in Step S12 described above, an evaluation value, an evaluation of which is the highest, is calculated as an integrated evaluation value. For example, assuming that each of the types of the sharing services A, B, and C that are providing sources is different from that of the sharing service D, the evaluation value S_{C}' = 5, which is a converted evaluation value of the sharing service C, is employed and the integrated evaluation value is calculated as "5".

Next, in Step S16, the providing unit 16 transmits, with the user ID, the integrated evaluation value that has been calculated by the conversion unit 14 in Step S14 or Step S15 described above to the sharing server 20 that corresponds to the sharing service that is a providing destination.

The user ID and the integrated evaluation value that have been transmitted are received by the API 24 and are stored in the evaluation value DB 22 of the sharing server 20 that is a providing destination.

As has been described above, with the evaluation value providing device according to the first embodiment, an evaluation value of a sharing service that is a providing source is acquired, is converted to a format of an evaluation value of a sharing service that is a providing destination, and then, is provided to the sharing service that is a providing destination. Thus, an evaluation of a user may be shared between different sharing services. Therefore, in a case where a user uses a new sharing service, or like case, an evaluation that has been already given in another evaluation sharing service may be taken over and, in the new sharing service, a burden of the user, which is caused by building credibility from scratch or the like, may be reduced.

If there is a plurality of sharing services (sharing services that are providing sources) that have already held an evaluation value of the user, the evaluation values are integrated and an integrated evaluation value is provided to a sharing service that is a providing destination. In this case, an evaluation value of a sharing service that is a providing source, the type of which is the same as that of the sharing service that is a providing destination, is preferentially integrated, and thereby, an evaluation value may be properly shared in accordance with the type of the service.

Also, at a sharing service side, an API that is used for inputting and outputting an evaluation value is merely provided in the sharing server 20, and therefore, when a new sharing service joins, or the like, this system may be easily applied.

Note that, although, in the above-described embodiment, a case where all of sharing services that hold an evaluation value of the user are evaluation value providing sources has been described, a sharing service that is a providing source may be designated. In this case, a configuration in which an evaluation value providing request from a user also includes information that identifies a sharing service that is a providing source and an evaluation value is acquired from a sharing server that corresponds to the designated sharing service may be employed.

### <Second Embodiment>

Next, a second embodiment will be described. Note that a part of an evaluation value providing system according to the second embodiment, which is similar to the corresponding part of the evaluation value providing system 100 according to the first embodiment, will be denoted by the same reference character as that of the corresponding part and the detailed description thereof will be omitted.

As illustrated in FIG. 1, an evaluation value providing system 200 according to the second embodiment includes an evaluation value providing device 210, a plurality of sharing servers 20, and a plurality of user terminals 30.

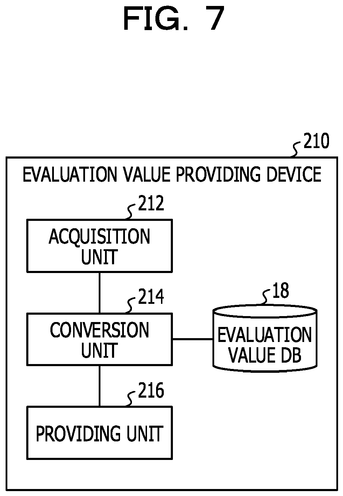

As illustrated in FIG. 7, the evaluation value providing device 210 functionally includes an acquisition unit 212, a conversion unit 214, and a providing unit 216. Also, an evaluation value DB 18 is stored in a predetermined storage area of the evaluation value providing device 210.

The acquisition unit 212 regularly acquires an evaluation value for each user from an evaluation value DB 22 of each of the sharing servers 20 via a corresponding API 24.

The conversion unit 214 converts each of evaluation values that correspond to a user ID of a specific user, which have been acquired by the acquisition unit 212, using a conversion algorithm that corresponds to a format of an evaluation value of one of sharing services that are providing sources. In order to determine to which format of the evaluation value the conversion algorithm that is used corresponds, for example, the degree of priority may be given to each format of an evaluation value in advance and a conversion algorithm that corresponds to a format, the degree of priority of which is high, may be employed. Also, similar to the conversion unit 14 according to the first embodiment, the conversion unit 214 calculates an integrated evaluation value from each of the evaluation values that have been converted.

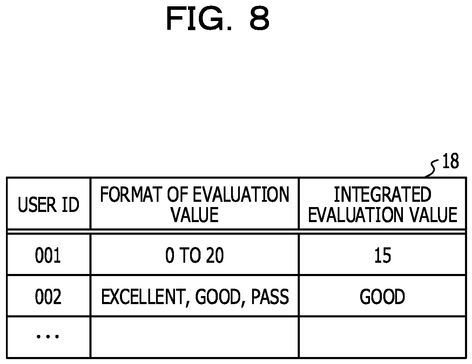

The conversion unit 214 stores the integrated evaluation value with the format of the evaluation value, which corresponds to the conversion algorithm that was used for conversion of the evaluation values that served as sources of the integrated evaluation value in association with the user ID in the evaluation value DB 18. Note that, if there is only a single evaluation value that has been acquired for the specific user, conversion of the evaluation value is not performed and the acquired evaluation value is stored as it is as the integrated evaluation value with the format of the evaluation value in the evaluation value DB 18. FIG. 8 illustrates an example of the evaluation value DB 18.

The providing unit 216 receives an evaluation value providing request including a user ID and a service ID of a providing destination from the user via the corresponding one of the user terminals 30. The providing unit 216 acquires an integrated evaluation value that corresponds to the user ID included in the evaluation value providing request from the evaluation value DB 18. The providing unit 216 causes the conversion unit 214 to function and thus convert the acquired integrated evaluation value by a conversion algorithm that corresponds to a format of an evaluation value of a sharing service indicated by the service ID included in the evaluation value providing request. The providing unit 216 transmits, with the user ID, the converted integrated evaluation value to one of the sharing servers 20, which corresponds to a sharing service that is a providing destination, indicated by the service ID.

The evaluation value providing device 210 may be realized by, for example, a computer 40 illustrated in FIG. 5. An evaluation value providing program 250 that causes the computer 40 to function as the evaluation value providing device 210 is stored in a storage unit 43 of the computer 40. The evaluation value providing program 250 includes an acquisition process 252, a conversion process 254, and a providing process 256. Also, the storage unit 43 includes an information storage area 58 in which information that forms the evaluation value DB 18 is stored.

A CPU 41 reads out the evaluation value providing program 250 from the storage unit 43 to expand the evaluation value providing program 250 in memory 42 and sequentially executes the processes included in the evaluation value providing program 250. The CPU 41 executes the acquisition process 252 and thereby operates as the acquisition unit 212 illustrated in FIG. 7. The CPU 41 also executes the conversion process 254 and thereby operates as the conversion unit 214 illustrated in FIG. 7. The CPU 41 also executes the providing process 256 and thereby operates as the providing unit 216 illustrated in FIG. 7. Also, the CPU 41 reads out information from the information storage area 58 to expand the evaluation value DB 18 in the memory 42. Thus, the computer 40 that has executed the evaluation value providing program 250 functions as the evaluation value providing device 210.

Note that the function that is realized by the evaluation value providing program 250 may be realized by, for example, a semiconductor integrated circuit, or, more specifically, an ASIC or the like.

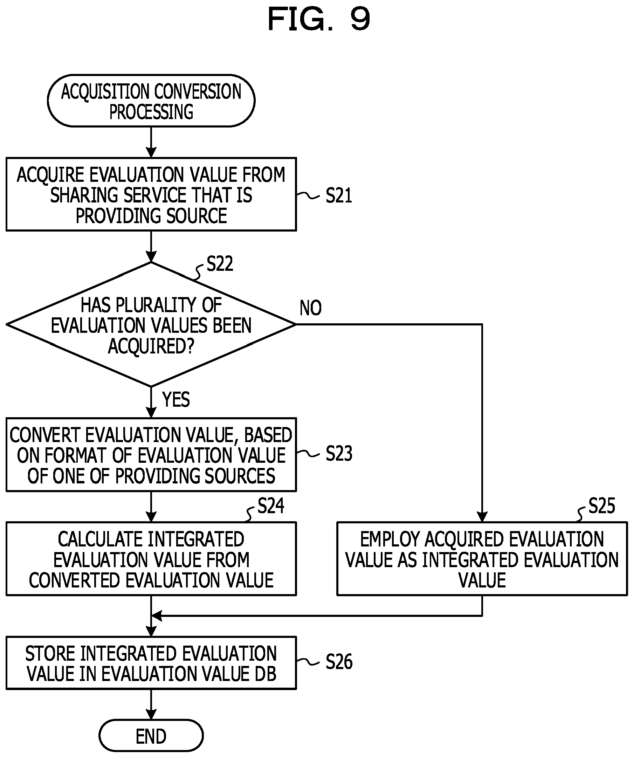

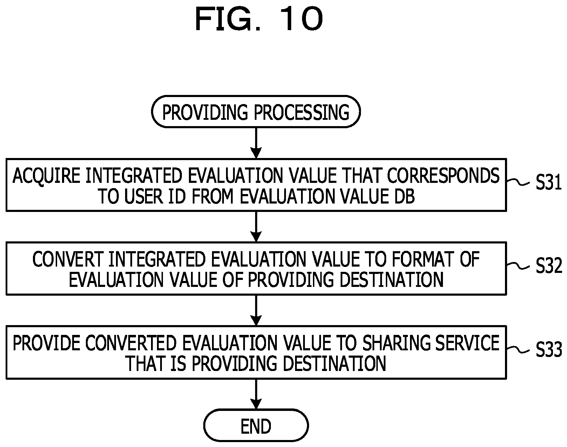

Next, an effect of the evaluation value providing system 200 according to the second embodiment will be described. In the evaluation value providing device 210, acquisition conversion processing illustrated in FIG. 9 is executed at regular timings. Also, when the evaluation value providing device 210 receives an evaluation value providing request that has been transmitted from one of the user terminals 30, providing processing illustrated in FIG. 10 is executed in the evaluation value providing device 210.

First, the acquisition conversion processing illustrated in FIG. 9 will be described. The acquisition conversion processing illustrated in FIG. 9 is processing for a single user that is a processing target and, for each user, the acquisition conversion processing illustrated in FIG. 9 is repeatedly executed on a regular basis.

In Step S21, the acquisition unit 212 acquires an evaluation value that corresponds to a user ID of the user, which is a processing target, from the evaluation value DB 22 of each of the sharing servers 20 via the corresponding API 24.

Next, in Step S22, the conversion unit 214 determines whether or not a plurality of evaluation values has been acquired by the acquisition unit 212, that is, whether or not there is a plurality of sharing services that are providing sources. If a plurality of evaluation values has been acquired, the process proceeds to Step S23 and, if only a single evaluation value has been acquired, the process proceeds to Step S25.

In Step S23, the conversion unit 214 selects a format of an evaluation value of one of the sharing services that are providing sources and determines an evaluation value conversion algorithm. Then, the conversion unit 214 converts each of the plurality of evaluation values that has been acquired using the determined conversion algorithm. Next, in Step S24, the conversion unit 214 calculates an integrated evaluation value from each of the evaluation values that have been converted.

On the other hand, in Step S25, the conversion unit 214 employs the acquired evaluation value as an integrated evaluation value. Next, in Step S26, the conversion unit 214 stores the calculated or employed integrated evaluation value with the format of the evaluation value in association with the user ID in the evaluation value DB 18 and the acquisition conversion processing ends.

Next, providing processing illustrated in FIG. 10 will be described.

In Step S31, the providing unit 216 acquires an integrated evaluation value that corresponds to the user ID included in the evaluation value providing request from the evaluation value DB 18.

Next, in Step S32, the providing unit 216 causes the conversion unit 214 to function and thus convert the acquired integrated evaluation value by a conversion algorithm that corresponds to a format of an evaluation value of a sharing service indicated by the service ID included in the evaluation value providing request.

Next, in Step S33, the providing unit 216 transmits, with the user ID, the converted integrated evaluation value to one of the sharing servers 20, which corresponds to the sharing service that is a providing destination indicated by the service ID, and the providing processing ends.

As has been described above, with the evaluation value providing device according to the second embodiment, an evaluation value for each user in each sharing service is integrated and an integrated evaluation value is stored in advance, and the stored integrated evaluation value is provided to a sharing service that is a providing destination in accordance with a request of a user. Thus, an evaluation of the user may be shared between different sharing services.

Also, in the second embodiment, an evaluation value regularly acquired from each sharing server is integrated and an integrated evaluation value is stored in the evaluation value DB of the evaluation value providing device in advance. Thus, at the time of reception of an evaluation value providing request from the user, even when there is a sharing service that is a providing destination that is not capable of acquiring an evaluation value because of maintenance or the like, a common evaluation value between sharing services may be provided to the user.

Note that, although, in each of the above-described embodiments, a case where an evaluation of a user is shared between sharing services has been described, the present disclosure may be applied to a service providing system that provides some other service than a sharing service.

Also, in the forgoing, embodiments in which the evaluation value providing program 50 or 250 is stored (installed) in the storage unit 43 in advance have been described, but the present disclosure is not limited thereto. The program may be provided in a form stored in a memory medium, such as CD-ROM, DVD-ROM, USB memory, or the like.

### REFERENCE SIGNS LIST

10, 210 an evaluation value providing device
12, 212 an acquisition unit
14, 214 a conversion unit
16, 216 a providing unit
18 an evaluation value DB
20 a sharing server
30 a user terminal
40 a computer
41 a CPU
42 a memory
43 a storage unit
49 a memory medium
50, 250 an evaluation value providing program
100, 200 an evaluation value providing system

## Claims

1. A method, executed by a computer, for providing evaluation value, the method comprising:
acquiring a first value of a first user from a first service system, the first value indicating a first evaluation of the first user in the first service system;
generating a second value in accordance with both the first value and an algorithm corresponding to a second service system; and
providing the second service system with the second value as a second evaluation of the first user in the second service system.

2. The method according to claim 1, wherein the first evaluation is evaluated by one or more users in the first service system.

3. The method according to claim 1, wherein a form of the second value is different from a form of the first value.

4. The method according to claim 1,
wherein the acquiring includes acquiring a third value of a first user from a third service system, the third value indicating a third evaluation of the first user in the third service system, and
wherein the second value is generated in accordance with the third value.

5. The method according to claim 4, wherein a service sort of the first service system and a service sort of the third service system are equal or similar to a service sort of the second service system.

6. The evaluation value providing method according to claim 1,
wherein the generating includes converting the first value to a first converted value in accordance with an algorithm corresponding to the first service system, and
wherein the second value is generated in accordance with the first converted value.

7. The method according to claim 6,
wherein the acquiring includes acquiring a third value of a first user from a third service system, the third value indicating a third evaluation of the first user in the third service system,
wherein the generating includes,
converting the third value to a third converted value in accordance with an algorithm corresponding to the third service system, and
determining an integrated value based on the first converted value and the third converted value, and
wherein the second value is generated in accordance with the integrated value.

8. A device for providing evaluation value, the device comprising:
a processing unit configured to:
acquire a first value of a first user from a first service system, the first value indicating a first evaluation of the first user in the first service system,
generate a second value in accordance with both the first value and an algorithm corresponding to a second service system, and
provide the second service system with the second value as a second evaluation of the first user in the second service system.

9. The device according to claim 8, wherein the processing unit further configured to,
acquire a third value of a first user from a third service system, the third value indicating a third evaluation of the first user in the third service system,
determine an integrated value based on the first value and the third value,
generate a fourth value in accordance with the integrated value and an algorithm corresponding to a fourth service system, and
provide the fourth service system with the fourth value as a fourth evaluation of the first user in the fourth service system.

10. A program that causes a computer to execute operations comprising:
acquiring a first value of a first user from a first service system, the first value indicating a first evaluation of the first user in the first service system;
generating a second value in accordance with both the first value and an algorithm corresponding to a second service system; and
providing the second service system with the second value as a second evaluation of the first user in the second service system.

11. The program according to claim 10, wherein the first evaluation is evaluated by one or more users in the first service system.

12. The program according to claim 10, wherein a form of the second value is different from a form of the first value.
